(19)

**Europäisches Patentamt**
**European Patent Office**
**Office européen des brevets**

(11) **EP 4 693 635 A1**

(12) **EUROPEAN PATENT APPLICATION**

(43) Date of publication:
**11.02.2026  Bulletin 2026/07**

(21) Application number: **25188943.2**

(22) Date of filing: **11.07.2025**

(51) International Patent Classification (IPC):
**H01M 50/107** (2021.01)    **H01M 50/533** (2021.01)
**H01M 10/04** (2006.01)    **H01M 50/536** (2021.01)
**H01M 50/538** (2021.01)

(52) Cooperative Patent Classification (CPC):
**H01M 50/536; H01M 10/0422; H01M 50/107;**
**H01M 50/538**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **01.08.2024  KR 20240102574**

(71) Applicant: **SK On Co., Ltd.**
**Seoul 03161 (KR)**

(72) Inventors:
• **KIM, Byung Mook**
  **34124 Daejeon (KR)**
• **KIM, Min Seong**
  **34124 Daejeon (KR)**
• **PARK, Byeong Hyeon**
  **34124 Daejeon (KR)**
• **LEE, Yong Seok**
  **34124 Daejeon (KR)**

(74) Representative: **Prüfer & Partner mbB**
**Patentanwälte · Rechtsanwälte**
**Sohnckestraße 12**
**81479 München (DE)**

(54) **CURRENT COLLECTING PLATE AND BATTERY CELL COMPRISING THE SAME**

(57)    The present disclosure relates to a current collecting plate (100) and a battery cell (10) comprising the same. According to an embodiment of the current collecting plate includes: a base portion (110) having a disc shape; a wall (120) extending away from the base portion along the edge of the base portion; and one or more notches (115) formed in the wall.

FIG. 1

**Description**

BACKGROUND OF THE INVENTION

1. Field

The present disclosure relates to a current collecting plate and a battery cell comprising the same. More particularly, it relates to a current collecting plate having improved impact resistance and a battery cell comprising the same, which has improved mechanical rigidity and stability.

2. Description of the Related Art

A secondary battery is a battery configured to convert electrical energy into chemical energy and store it so that it can be reused a plurality of times by charging and discharging, and a plurality of secondary batteries may be grouped together to form a battery assembly to achieve a desired output and performance. Such a battery assembly may include a plurality of secondary batteries, i.e., a plurality of battery cells, in an internal accommodating space as described above.

Secondary batteries can be categorized into canned secondary batteries and pouch secondary batteries based on the shape of the case. Cylindrical secondary batteries can be further categorized into cylindrical and prismatic secondary batteries based on the shape of the can or case.

On the other hand, if the mechanical rigidity and stability of the individual battery cells comprising the battery assembly are not sufficiently secured, the internal components of the battery cells may be deteriorated or damaged, or the connections or bonding structures between the internal components may be deteriorated or damaged, due to vibration, shock, etc. applied from outside the battery assembly. Such deterioration or damage can cause electrical short circuits, etc., which can result in catastrophic safety issues such as internal ignition.

In accordance with one aspect of the present disclosure, a current collecting plate having improved impact resistance from external forces can be provided.

In accordance with another aspect of the present disclosure, a battery cell with improved mechanical stiffness and stability can be provided.

In accordance with another aspect of the present disclosure, a secondary battery with improved safety can be provided.

The present disclosure can be widely applied in the field of green technology, such as electric vehicles, battery charging stations, energy storage systems (ESS), and other green technologies such as photovoltaics and wind power utilizing batteries. The present disclosure can also be used in eco-friendly mobility, including electric and hybrid vehicles to reduce air pollution and greenhouse gas emissions to prevent climate change.

SUMMARY OF THE INVENTION

A current collecting plate according to an embodiment of the present disclosure may comprise: a base portion having a disc shape; a wall extending away from the base portion along the edge of the base portion; and one or more notches formed in the wall.

In an embodiment, the current collecting plate may be a current collecting plate containing a copper.

In an embodiment, the base portion may include one or more grooves through the base portion.

In an embodiment, the base portion may include one or more electrode welding portions to which an electrode is welded.

In an embodiment, the wall may be extended in one direction from the edge of the base portion.

In an embodiment, the one or more notches may be tapered in a direction away from the base portion.

In an embodiment, the depth of the one or more notches may be 0.1 to 0.5 times the extended length of the wall.

In an embodiment, the one or more notches may be formed in plurality at preset intervals on the wall.

In an embodiment, the wall may be extended in two different directions from the edge of the base portion.

In an embodiment, the wall may include one or more case welding portions to which the case is welded, the one or more case welding portions and the one or more notches may be spaced apart from each other.

A battery cell according to another embodiment of the present disclosure may comprise: a case including a cylindrical sidewall having an accommodating space inside; an electrode assembly accommodated in the accommodating space; and a current collecting plate; wherein the current collecting plate may be electrically connected to the electrode assembly, the current collecting plate may include a base portion having a disk shape, a wall extended away from the base portion along an edge of the base portion, and one or more notches formed in the wall.

In another embodiment, the base portion and the electrode assembly may be connected, thereby the current collecting plate and the electrode assembly may be electrically connected to each other.

In another embodiment, the electrode assembly may include a first electrode including a first non-coated portion and a second electrode including a second non-coated portion, the second non-coated portion may be connected to the base portion.

In another embodiment, the wall and the sidewall of the case may be connected to each other, thereby the current collecting plate and the case are electrically connected to each other.

In another embodiment, the wall and the sidewall may be connected by welding.

In accordance with one aspect of the present disclosure, the impact resistance of a current collecting plat from external forces may be improved.

In accordance with another aspect of the present disclosure, the mechanical stiffness and stability a battery cell may be improved.

In accordance with another aspect of the present disclosure, the safety of a secondary battery may be improved.

BRIEF DESCRIPTION OF THE DRAWINGS

FIG. 1 illustrates an example of a current collecting plate according to one embodiment of the present disclosure.

FIG. 2 illustrates an example of a current collecting plate according to one embodiment of the present disclosure viewed from one direction.

FIG. 3 illustrates an example of a current collecting plate according to one embodiment of the present disclosure viewed from another direction.

FIG. 4 illustrates an example of a current collecting plate according to another embodiment of the present disclosure.

FIG. 5 illustrates an example of a current collecting plate according to another embodiment of the present disclosure viewed from one direction.

FIG. 6 illustrates another example of a current collecting plate according to one embodiment of the present disclosure.

FIG. 7 illustrates another example of a current collecting plate according to another embodiment of the present disclosure.

FIG. 8 illustrates an example battery cell according to one embodiment of the present disclosure.

FIG. 9 is a cross-sectional view in region A of the battery cell of FIG. 8.

DETAILED DESCRIPTION

Hereinafter, referring to the accompanying drawings, embodiments of the present disclosure are described in detail so that those skilled in the art to which the present disclosure pertains can easily practice them. However, the present disclosure may be implemented in a number of different forms and is not limited to the embodiments described herein. Further, in order to clearly explain the present disclosure in the drawings, parts that are not related to the explanation are omitted, and similar parts are given similar reference numerals throughout the specification.

The embodiments described herein may be modified in many other ways, and therefore the technology according to one embodiment is not limited to the embodiments described herein. Furthermore, throughout the specification, references to "including," "comprising," "having," "containing," or "having" any component are not intended to exclude other components, but rather to indicate that other components may be further included, and are not intended to exclude elements, materials, or processes not further enumerated.

As used herein, equal or uniform may mean identical or uniform to each other within acceptable tolerances unless otherwise specified. For example, equal in composition or property measurements may mean that the two objects being compared are not only exactly the same, but are also identical within a margin of error. On the other hand, having the same physical property measurements may mean that the difference in the measurements between the objects is approximately less than 5%, more specifically less than 3%, or more specifically less than 1%.

As used herein, an angle formed by two objects that is perpendicular or parallel to each other can include being geometrically perpendicular or parallel, as well as being within a small margin of error.

As used herein, numerical ranges include lower and upper bounds and all values within them, increments logically derived from the shape and width of the range being defined, all values that are doubly bounded, and all possible combinations of upper and lower bounds of numerical ranges bounded in different forms.

Unless otherwise defined herein, "about" may be considered to be a value within 30%, 25%, 20%, 15%, 10%, or 5% of the stated value.

The use of the terms "first," "second," "third," "fourth," and the like before any component in this specification is intended to avoid confusion as to the component to which it refers, and is not intended to indicate any order, importance, or master-servant relationship between the components. For example, an invention may comprise only the second component without the first component.

As used herein, the term "electrically connected" may mean, without limitation, any method of connection by which multiple objects may be electrically connected to each other.

A configuration, as defined herein as "...a part," may mean, without limitation, a single component or a set of two or more identical or similar components that have a functional aspect in common.

As used herein, "first direction (DR1)," "second direction (DR2)," and "third direction (DR3)" may refer to any of the directions that comprise a Cartesian coordinate system perpendicular to each other in three-dimensional space.

As used herein, the term "disposed" can refer to any positional relationship in which one object can be positioned adjacent to another object, without limitation. By way of non-limiting example, it may mean coating one object on another, bonding one object to another with an adhesive substance, fusing by applying heat, pressure, or the like, or simply positioning at least a portion of one object so that at least a portion of the other object abuts at least a portion of the other object within any space.

As used herein, a reference to an object "covering" another object may mean, without limitation, a functional or structural relationship in which one object is disposed at least adjacent to another object such that the other object is able to block or mitigate any external factors that may be imposed on the other object or a third object. Alternatively, it can mean, without limitation, a functional or compositional relationship in which one object is disposed at least adjacent to a third object, such that one object can block or mitigate any external factors that may be exerted on the other object by the third object and the third object.

As used herein, the term "secondary battery" may refer to a battery that generates electrical energy by the oxidation and reduction reactions of ions, more specifically cations such as lithium ions, when inserted and removed from or to its anode and cathode. More specifically, "secondary battery" may refer to any of the following: a lithium cobalt battery, a lithium high nickel battery, a lithium iron phosphate battery, a lithium ion battery, a lithium polymer battery, a lithium sulfur battery, a nickel hydrogen battery, a nickel cadmium battery, a sodium battery, and an all-solid-state battery. More specifically, as used herein, the term "secondary battery" may refer to, but is not necessarily limited to, a lithium-ion secondary battery.

As used herein, the term "Battery Cell" may refer to the basic unit of a secondary battery capable of charging and discharging electrical energy.

In the following, the present disclosure will be described in detail. However, this is by way of example only and the disclosure is not limited to the specific embodiments described.

Current collecting plate

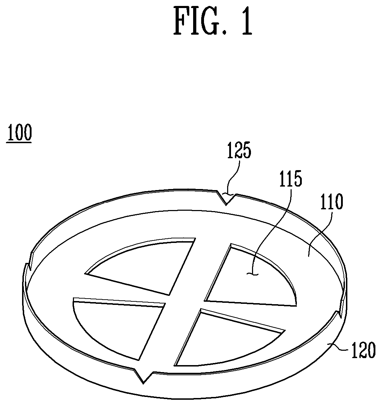

FIG. 1 illustrates an example of a current collecting plate according to one embodiment of the present disclosure.

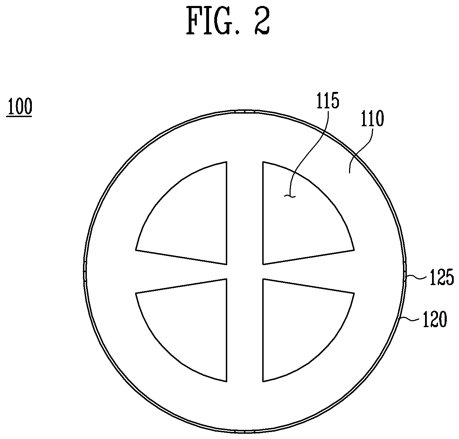

FIG. 2 illustrates an example of a current collecting plate according to one embodiment of the present disclosure viewed from one direction.

A current collecting plate 100, according to one embodiment of the present disclosure, may include a disc-shaped base portion 110; a wall 120 extending along an edge of the base portion 110 in a direction away from the base portion 110; and one or more notches 125 formed in the wall 120.

Referring now to FIGS. 1 and 2, the current collecting plate 100 may include a disk-shaped base portion 110.

In one embodiment, the base portion 110 may be formed in the shape of a disk. However, this is not necessarily limited, and the base portion 110 may also be formed as a circle, oval, oblong, square, rectangle, or square or rectangular shape with at least some of the edges rounded.

In one embodiment, the base portion 110 may be formed as a flat shaped plane. However, it is not necessarily limited thereto, and the base portion 110 may have a curved shape in some areas as desired.

In one embodiment, the current collecting plate 100 may contain a conductive material such as copper, gold, silver, stainless steel, nickel, aluminum, titanium or an alloy thereof, or a conductive polymer.

Referring to FIGS. 1 and 2, the edges of the base portion 110 may be defined as a set of points or regions that delineate one end of the base portion 110, which may include a flat or partially curved surface.

In a specific embodiment, the current collecting plate 100 may contain copper. The current collecting plate 100 may contain only copper as its material, or may be coated, doped, or otherwise treated, or may contain an alloy of copper.

In other words, the current collecting plate 100 may be electrically conductive due to its material features. On the other hand, the current collecting plate 100 may have a certain degree of elasticity. Therefore, as the notch 125 structure is formed as will be described later, impact resistance can be secured by the elasticity of the material itself.

In one embodiment, the thickness of the current collecting plate 100 may be from 0.3 mm to 0.6 mm. In a specific embodiment, the thickness of the current collecting plate 100 may be 0.3 mm to 0.5 mm. Although not necessarily limited thereto, in some specific embodiments, the thickness of the current collecting plate 100 may be 0.4 mm.

Referring again to FIGS. 1 and 2, in one embodiment, the base portion 110 may include one or more grooves 115 through the base portion 110.

In one embodiment, the groove 115 may refer to an open area in the direction that penetrates both sides of the base portion 110. Accordingly, the groove 115 may refer to an open area in the base portion 110.

Meanwhile, the groove 115 may be provided in the base portion 110 for various purposes. For example, the groove 115 may be formed to provide a flow path for electrolyte within the battery cell 10, as will be described later, or, concurrently or independently, the groove 115 may be formed to improve the mechanical rigidity of the current collecting plate 100 by absorbing external forces, such as shear stress, that may be applied to the current collecting plate 100.

In one embodiment, the groove 115 may be provided in the base portion 110 in various shapes. For example, it may be provided in a fan-shaped configuration as shown in FIGS. 1 and 2. However, as shown in FIGS. 1 and 2 are intended only to illustrate one example applicable to the present disclosure, the groove 115 may be provided in various shapes, such as triangular, circular, oval, square, hexagonal, or other shapes other than fan-shaped, or at least some combination of triangular, circular, oval, square, hexagonal, or other shapes.

In one embodiment, the groove 115 may be provided in a plurality on the current collecting plate 100. For example, four grooves 115 may be provided in the same shape and equally spaced apart, as shown in FIGS. 1 and 2. However, as shown in FIGS. 1 and 2 are intended only to illustrate one example applicable to the present disclosure, the groove 115 may be provided in various numbers as desired, and/or at least some of the groove 115 may be spaced differently than at least some of the other groove 115 as desired. Furthermore, when a plurality of groove 115 are provided, at least some of the groove 115 may be provided in a different shape than at least some of the other grooves as shown in FIGS. 1 and 2.

In one embodiment, the base portion 110 may include one or more electrode welding portions (not shown) where the electrodes are welded.

As will be described later, when the current collecting plate 100 is disposed within battery cell 10, it may be electrically connected with at least some of the electrodes of battery cell 10. Furthermore, at least some of the electrodes of the battery cell 10 may be connected to a base portion 110 of the current collecting plate 100, and in specific embodiments, at least some of the electrodes may be connected by being welded to the base portion 110. The electrode welding portions (not shown) may be configured to be provided on the base portion 110 for such welded coupling, i.e., at least some of the electrodes and the current collecting plate 100 may be welded together at the electrode welding portions (not shown). Meanwhile, the welding may be performed by any welding method known in the art, such as, without limitation, ultrasonic welding, laser welding, and the like.

In one embodiment, the wall 120 may extend along an edge of the base portion 110 in a direction away from the base portion 110. In one embodiment, the wall 120 may extend in a direction away from the base portion 110 along an edge of the base portion 110, relative to any other direction that may be included on the base portion 110.

In a specific embodiment, the wall 120 may extend in a direction perpendicular to the surface of the base portion 110. However, this is not necessarily limited, and the wall 120 may extend in a direction that forms various angles with the surface of the base portion 110, as desired.

In one embodiment, the base portion 110 and the wall 120 may be formed integrally. Alternatively, in one embodiment, the base portion 110 and the wall 120 may be formed separately from each other and then bonded together. In such embodiments, the base portion 110 and the wall 120 may be formed in a structure that is separable from each other, or alternatively, may be formed in a structure that is not separable from each other.

Referring again to FIG. 1, in one embodiment, the wall 120 may extend in one direction from an edge of the base portion 110. In such an embodiment, the base portion 110 may form a boundary with the wall 120 at either end of the wall 120. In such an embodiment, the current collecting plate 100 may be formed in a dish-like structure, with the wall 120 being folded to one side at an edge of the base portion 110.

In one embodiment, the notches 125 may be formed in the wall 120. As described above, one or more of notches 125 may be formed in the wall 120.

Referring again to FIG. 1, in one embodiment, the notch 125 may be formed in a tapered shape in a direction away from the base portion 110. In a specific embodiment, the notch 125 may be tapered to open in a direction away from the base portion 110. The angle of inclination of the tapered structure may not be particularly limited.

In one embodiment, the notch 125 may be formed to be spaced apart from the edge of the base portion 110, i.e., the notch 125, which is formed in a tapered shape in a direction away from the base portion 110, as shown in FIG. 1, may be formed such that an innermost portion defined as the portion of the notch 125 closest to the base portion 110 is spaced apart from the edge of the base portion 110.

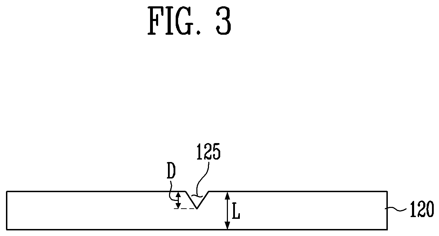

FIG. 3 illustrates an example of a current collecting plate according to one embodiment of the present disclosure viewed from another direction.

For example, while FIG. 2 illustrates an example view of a current collecting plate 100 according to one embodiment of the present disclosure from a height direction, FIG. 3 may be a drawing illustrating an example view of the current collecting plate 100 from a direction forming an angle of 90° with the height direction.

Referring to FIG. 3, in one embodiment, the depth D of the notch 125 may be 0.1 times to 0.5 times the extended length L of the wall 120. The depth D of the notch 125 may be defined as the minimum value of a straight line distance from the opening of the notch 125 to the deepest part of the notch 125. Meanwhile, the extended length L of the wall 120 may be defined as the minimum straight line distance from one end of the wall abutting the edge of the base portion 110 to the other end.

On the other hand, according to the above-described embodiment, the depth D of the notch 125 and the extended length L of the wall 120 may satisfy the relationship defined by the relation 1 below.

[Relation 1].

$$0.1L \leq d \leq 0.5L$$

Below the above numerical range, the shock absorption effect of the notches 125 may be insignificant, and the above numerical range, the notches 125 may be formed so deeply that even a small impact on the wall 120 or the current collecting plate 100 may easily cause the portion in which the notches 125 are formed to break.

In one embodiment, the notches 125 may be formed at a plurality of preset intervals on the wall 120.

Referring to FIG. 1, the notches 125 may be formed at a plurality of preset intervals on the wall 120. As the notches 125 are formed at a plurality of preset intervals on the wall 120, the wall 120 may be configured to have a plurality of nodes. Accordingly, the wall 120 may further improve its stiffness against impacts generated in a localized area, i.e., its impact resistance from localized external forces.

On the other hand, the notches 125 may be formed in plurality at equal intervals on the wall 120. According to an exemplary embodiment, the notches 125 may be formed in numbers of 4 to 90 at equal intervals on the wall 120.

According to an exemplary embodiment, four notches 125 may be provided with the same shape and equally spaced as shown in FIG. 1. However, the notches 125 shown in FIG. 1 are only intended to illustrate one example applicable to the present disclosure, and the notches 125 may comprise from 4 to 90 notches 125 at equal intervals, wherein each notch 125 may be formed in a shape independent of the others without prejudice to the matters defined in the present disclosure. Alternatively, the notches 125 may be provided at a preset interval and, as described above, at least some of the plurality of notches 125 may be formed at a different interval than at least some of the remaining others.

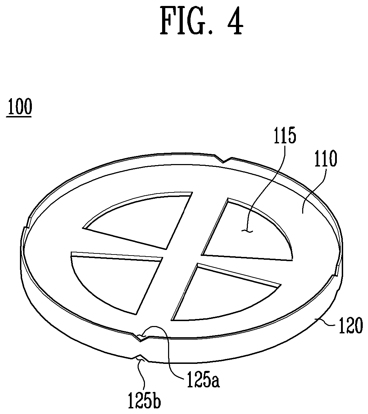

FIG. 4 illustrates an example of a current collecting plate according to another embodiment of the present disclosure.

In one embodiment, the wall 120 may extend in two different directions from the edge of the base portion 110.

Referring to FIG. 4, the wall 120 may extend in two opposite directions from the edge of the base portion 110. In such an embodiment, the base portion 110 may form an edge with the wall 120 at an imaginary line circumventing both ends of the wall 120. In such an embodiment, the current collecting plate 100 may be formed in a structure in which the walls 120 are bent to different sides at the edges of the base portion 110.

In one embodiment, the walls 120 may extend in different directions from the edges of the base portion 110, but may extend symmetrically to each other. In such an embodiment, the base portion 110 may form a boundary with the wall 120 at an imaginary line connecting the centers of the two ends of the wall 120. In such an embodiment, the current collecting plate 100 may be formed in a structure in which the walls 120 are symmetrically bent to different sides at the edges of the base portion 110.

Referring again to FIG. 4, in one embodiment, the notch 125 may be formed in a tapered shape in a direction away from the base portion 110. As shown in FIG. 4, in one embodiment, the base portion 110 may, as described above, form a boundary with the wall 120 at an imaginary line connecting the centers of the two ends of the wall 120. In this case, the notches 125 may be formed as a pair opening in a symmetrical direction with respect to the base portion 110, but the pair of notches 125a, 125b may be tapered to open in a direction away from the base portion 110, respectively. The angle of inclination of the tapered structure may not be particularly limited.

On the other hand, in one embodiment, the notches 125 may be formed to be spaced apart from the edge of the base portion 110. That is, the pair of notches 125a, 125b, which are formed in a tapered shape in a direction away from the base portion 110, as shown in FIG. 4, may be formed such that the respective innermost portions of each of the pair of notches 125a, 125b, defined as the portions closest to the base portion 110, are spaced apart from the edge of the base portion 110.

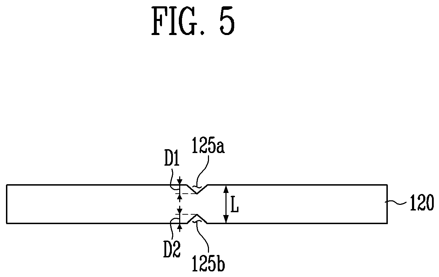

FIG. 5 illustrates an example of a current collecting plate according to another embodiment of the present disclosure viewed from one direction.

For example, FIG. 5 may be an illustration of an exemplary view of the current collecting plate 100 from the same orientation as FIG. 3.

Referring to FIG. 5, in one embodiment, the depth of the notches 125 may be 0.1 times to 0.5 times the extended length L of the wall 120. In one embodiment, the depth of the notches 125 may be the sum of the depths D1, D2 of each of the pair of notches 125a, 125b. The depths D1, D2 of each of the pair of notches 125a, 125b may be defined the same as in the depth D of the notches 125 described with reference to FIG. 3, and the extended length L of the wall 120 may be defined the same as described above with reference to FIG. 3.

On the other hand, according to the above-described embodiment, the depths D1, D2 of the pair of notches and the extended length L of the wall 120 may satisfy the relationship defined by the relation 2 below.

[Relation 2].

$$0.1L \leq D1 + D2 \leq 0.5L$$

Below the above numerical range, the shock absorption effect of the notches 125 may be insignificant, and above the above numerical range, the notches 125 may be formed so deeply that even a small impact on the wall 120 or the current collecting plate 100 may easily cause the portion in which the notches 125 are formed to break.

While FIGS. 4 and 5 illustrate embodiments in which a pair of notches 125a, 125b are formed in the same shape, it is recognized that this is not necessarily the case, and that the pair of notches 125a, 125b are only paired in the direction in which they open, and that the shape itself may be formed in some other way.

In addition, the description of the notch 125 described with reference to FIGS. 1 and 3 may be applied without limitation.

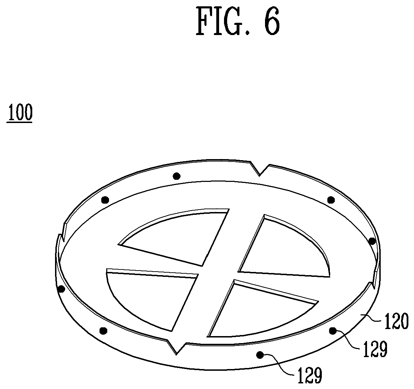

FIG. 6 illustrates another example of a current collecting plate according to one embodiment of the present disclosure.

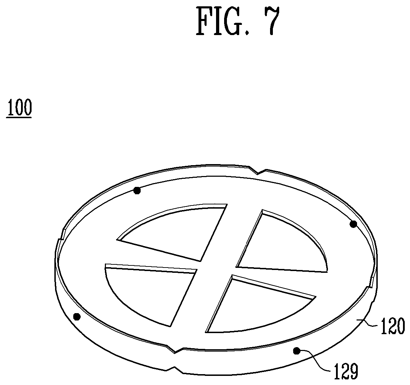

FIG. 7 illustrates another example of a current collecting plate according to another embodiment of the present disclosure.

In one embodiment, the wall 120 further comprises one case welding portion 129 to which the case is welded, wherein the case welding portion 129 and notch 125 may be spaced apart from each other.

In view of the above, FIG. 6 may illustrate an example of a case welding portion 129 formed on the current collecting plate 100 of FIG. 1, and FIG. 7 may illustrate an example of a case welding portion 129 formed on the current collecting plate 100 of FIG. 4.

As will be described later, when the current collecting plate 100 is disposed within the battery cell 10, it may be electrically connected with the case 310 of the battery cell 10, specifically with the sidewall 311 of the case 310. Furthermore, the case of the battery cell 10, specifically the sidewall 311, may be connected to a wall 120 of the current collecting plate 100, and in a specific embodiment, the sidewall 311 may be connected by being welded to the wall 120. The case welding portion 129 may be configured to be provided on the wall 120 for such a welded connection, i.e., the sidewall 311 and the current collecting plate 100 may be joined by welding at the case welding portion 129. Meanwhile, the welding may be performed by any welding method known in the art, such as, but not limited to, ultrasonic welding, laser welding, and the like.

In one embodiment, the case welding portion 129 and the notch 125 may be spaced apart from each other.

In one embodiment, the case welding portions 129 may be formed at a plurality of preset intervals on the wall 120.

Referring again to FIGS. 6 and 7, the case welding portions 129 may be formed at a plurality of preset intervals on the wall 120.

In one aspect, a plurality of case welding portions 129 may be formed at equal intervals on the wall 120. However, this is optional and, as described above, at least some of the plurality of case welding portions 129 may be spaced differently from at least some of the others.

In one embodiment, the notches 125 may be formed at a plurality of preset intervals on the wall 120. Thus, the case welding portions 129 may be formed between the notches 125 adjacent to each other. Alternatively, the plurality of case welding portions 129 may be formed between the notches 125 adjacent to each other. In such an embodiment, the number of the case welding portions 129 may be more than the number of the notches 125.

By including the structure as described above, both the impact resistance to external forces in the left and right directions and the impact resistance to external forces in the up and down directions applied to the current collecting plate 100 can be improved in a battery cell 10 in which the current collecting plate 100 is welded together with the electrode assembly 200 and the case 310, as will be described later, when external forces are applied to the battery cell 10, In particular, the impact resistance to external forces that may be concentrated in a localized area may also be improved, and consequently, the mechanical stiffness of the entire structure of the battery cell 10, as well as of the current collecting plate 100 itself, may be improved.

## Battery Cell

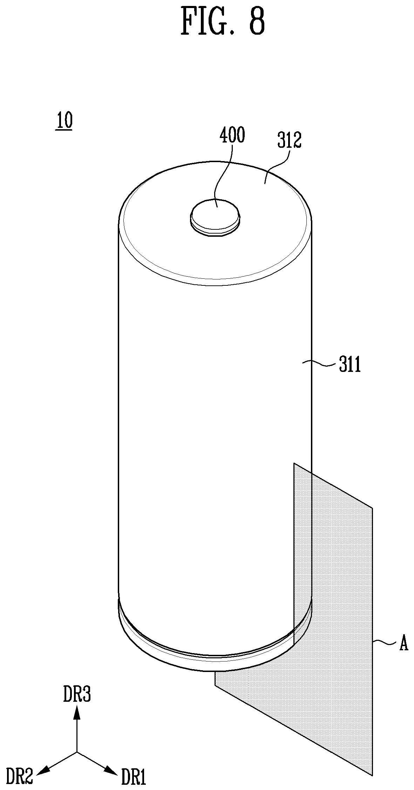

FIG. 8 is a diagram illustrating an example battery cell according to one embodiment of the present disclosure.

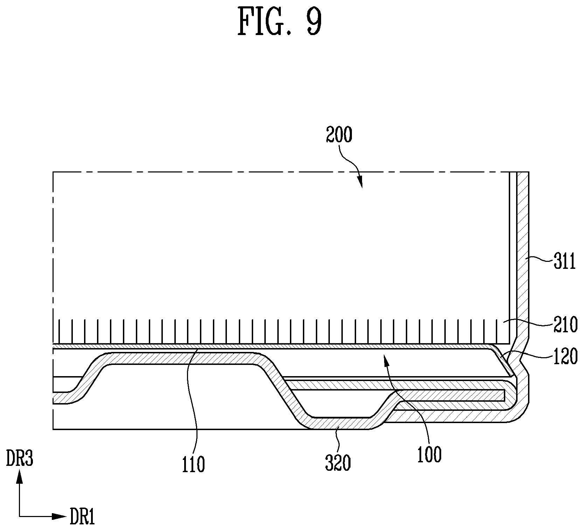

FIG. 9 is a cross-sectional view in region A of the battery cell of FIG. 8.

A battery cell 10 according to one embodiment of the present disclosure may include a case 310 including a cylindrical sidewall 311 having an accommodation space inside; an electrode assembly 200 accommodated in the accommodating space; and a current collecting plate 100; wherein the current collecting plate 100 is electrically connected to the electrode assembly 200, the current collecting plate 100 may include a base portion 110 having a disk shape, a wall 120 extended away from the base portion 110 along an edge of the base portion 110, and one or more notches 125 formed in the wall.

In one embodiment, the current collecting plate 100 may be defined the same as the current collecting plate 100 according to one embodiment of the present disclosure described above.

In one embodiment, the case 310 may include a cylindrically shaped sidewall 311 having an accommodating space therein.

In one embodiment, the sidewall 311 may be formed in a cylindrical shape. In a specific embodiment, the sidewall 311 may be formed in a cylindrical shape with an interior accommodating space. The sidewall 311 can accommodate the electrode assembly 200 and the current collecting plate 100 in the interior accommodating space.

As shown in FIGS. 8 and 9, the battery cell 10 according to one embodiment of the present disclosure may be a cylindrical, can-type secondary battery, but is not necessarily limited thereto.

In one embodiment, the case 310 may further comprise a closed end 312 formed at one end of the sidewall 311 and an opened end provided at the other end of the sidewall 311.

In one embodiment, the closed end portion 312 may be formed at one end of the sidewall 311. In a specific embodiment, the closed end portion 312 may be formed at one end of the sidewall 311, in a direction perpendicular to an extension direction of the sidewall 311, so as to seal an end of the sidewall 311. Here, the one end may refer to any of the two ends of the sidewall 311, which are formed in a cylindrical shape, when viewed relative to the direction of extension of the sidewall 311.

In one embodiment, the closed end portion 312 may be formed extending from one end of the sidewall 311, i.e., in such a case, the closed end portion 312 may be integrally formed with the sidewall 311.

Alternatively, in one embodiment, the closed end portion 312 may be formed at one end of the sidewall 311, but may be formed separately from the sidewall 311. In such an embodiment, the closed end portion 312 may be formed as a separable structure from the sidewall 311.

In one embodiment, the closed end 312 may define a cap assembly with electrode terminals 400 and gaskets, etc. to be described later. These will be described later.

In one embodiment, the opening may be provided at the other end of the sidewall 311. Here, the other end may refer to any one of the two ends of the sidewall 311 that are formed in a cylindrical shape when viewed relative to the direction of extension of the sidewall 311.

In one embodiment, the opened end may be in communication with the accommodating space. Thus, the electrode assembly 200 and the current collecting plate 100 may be accommodated inside the case 310 through the opened end. In one embodiment, the opened end may be sealed by being covered by a cap-plate 320, which will be described later. When the opened end is covered by the cap-plate 320, the accommodating space may be sealed from the outside by the sidewall 311, closed end portion 312, and cap-plate 320.

In one embodiment, the opened end may be a circular, elliptical or oblong planar space communicating with the accommodating space and tangent to the once.

In one embodiment, the cap-plate 320 may cover the opened end. As described above, the opened end may be sealed by being covered by the cap-plate 320.

In one embodiment, the cap-plate 320 may further comprise a filling portion for filling the electrolyte as needed, or a notching portion for venting gases.

In an exemplary embodiment, the cap-plate 320 may be welded to the case 310. In an exemplary embodiment, the welding may be any welding method that may be used to join metallic materials, without limitation.

In an exemplary embodiment, the cap-plate 320 may be beading bonded to the case 310. In an exemplary embodiment, the beading bonding may be accomplished by beading at least a portion of the other end region adjacent to the opened end in the sidewall 311 along the perimeter of the sidewall 311, then positioning the cap-plate 320 over the beaded region so that the cap-plate 320 covers the opened end, and then crimping the other end region in the sidewall 311, but is not necessarily limited thereto.

In one embodiment, the case 310 and the cap-plate 320 may comprise the same material. Alternatively, the case 310 and cap-plate 320 may comprise different materials.

In one embodiment, the electrode assembly 200 may be accommodated in accommodating space of the case 310. In a specific embodiment, the electrode assembly 200 may be rolled and accommodated in the accommodating space of the case 310.

In one embodiment, the electrode assembly may comprise an electrode and a separator comprising a cathode and an anode. In a specific embodiment, the electrode assembly may be formed by stacking the anode, separator, and cathode one after the other, and the stack may be accommodated in the accommodating space by winding the stack into a roll about a winding axis. The stack wound in such a roll form may be referred to as a jelly-role. The roll form may be circular in cross-section, but is not necessarily limited thereto, and may have various shapes, such as oval, oblong, or rectangular, including curved.

According to an exemplary embodiment, the electrodes may include a first electrode and a second electrode.

According to an exemplary embodiment, the first electrode and second electrode may each comprise an electrode collector and an electrode active material applied to one face of the electrode collector.

According to an exemplary embodiment, the anode may comprise an anode collector and an anode active material. The anode collector may comprise any conductive material known in the art to the extent that it does not cause a chemical reaction within the lithium secondary cell. The anode collector may contain any one of, for example, stainless steel, nickel, aluminum, titanium, copper and alloys thereof, and may be provided in various forms, such as film, sheet, foil, and the like. The anode active material may comprise a material into which the lithium ions can be inserted and removed. The anode active material may be, for example, a lithium metal oxide.

According to an exemplary embodiment, the cathode may comprise a cathode collector and a cathode active material. The cathode may comprise a cathode collector and a cathode active material applied to one surface of the cathode collector. The cathode collector may comprise a conductive material known in the art to the extent that it does not cause a chemical reaction within the lithium secondary battery. The cathode collector may contain any one of, for example, stainless steel, nickel, aluminum, titanium, copper, and alloys thereof, and may be provided in various forms, such as film, sheet, foil, and the like. The cathode active material may comprise a material into which the lithium ions can be inserted and removed. The cathode active material may include, for example, a carbon-based material, such as crystalline carbon, amorphous carbon, carbon composite, carbon fiber, etc., a lithium alloy, any one of silicon and tin, or a combination thereof.

According to an exemplary embodiment, the first and second electrodes may further comprise a binder and a coating material, respectively, for enhancement of mechanical stability and electrical conductivity.

According to an exemplary embodiment, the separator may be included to prevent an electrical short between the first and second electrodes and allow the flow of ions to occur. The separator may comprise a porous polymeric film or a porous nonwoven fabric, for example.

According to an exemplary embodiment, the electrode assembly 200 may be immersed in an electrolyte solution within the case 310. The electrolyte may be a non-aqueous electrolyte. The electrolyte may comprise a lithium salt and an organic solvent, and may further comprise additives as desired.

According to an exemplary embodiment, the first electrode and the second electrode may each comprise a non-coated portion to which no active material has been applied, at both ends of the collector.

According to an exemplary embodiment, the first electrode may comprise a first non-coated portion (not shown) and the second electrode may comprise a second non-coated portion 210.

According to an exemplary embodiment, the first non-coated portion (not shown) and the second non-coated portion 210 may be formed to be withdrawn in a direction facing the opened end and the closed end 312, respectively, independently. In an exemplary embodiment, the first non-coated portion (not shown) and the second non-coated portion 210 may be formed to be withdrawn simultaneously in either of the directions of facing the opened end and facing the closed end 312.

According to an exemplary embodiment, the first non-coated portion (not shown) and the second non-coated portion 210 may each include a flag structure in which a plurality of cutouts are formed at the outer end at a preset spacing and depth, and then at least a portion of the region between adjacent pairs of cutouts is folded in a preset direction, respectively. As will be described later, the current collecting plate 100 may mate with the portion of the electrode assembly 200 having the above-mentioned flag structure formed at the non-coated portion.

According to an exemplary embodiment, the electrode assembly 200 may be wound in the form of a roll, but with a cavity formed along the winding axis. The cavity may be formed in a cylindrical shape. The cavity may function as a passageway for the electrolyte to flow during the electrolyte injection in the manufacturing process of the battery cell 10. The cavity may be formed as a pathway connecting a center of the cap-plate 320 and a center of the closed end 312.

According to an exemplary embodiment, the battery cell 10 may further comprise an insulating member to prevent electrical short circuits between components within the accommodating space. The insulating member may be provided within the accommodating space in the form of an insulating pad, a gasket, or the like.

According to an exemplary embodiment, the insulating member may be located between the cap-plate 320 and the sidewall 311 of the case 310 and/or the current collecting plate 100, so as to prevent electrical contact between the cap-plate 320 and the sidewall 311 and/or the current collecting plate 100. On the other hand, the insulating member may also be positioned between the second current collecting plate (not shown) and the closed end portion 312 and/or the sidewall 311 of the case 310, configured to prevent electrical contact between the second current collecting plate (not shown) and the closed end portion 312 and/or the sidewall 311 of the case 310.

In one embodiment, the current collecting plate 100 may be electrically connected with the electrode assembly 200.

In one embodiment, the current collecting plate 100 may include a disc-shaped base portion 110; a wall 120 extending along an edge of the base portion 110 in a direction away from the base portion 110; and one or more notches 125 formed in the wall 120.

The foregoing description of the current collecting plate 100 with reference to FIGS. 1 to 7 may be applied without limitation.

Referring again to FIG. 9, in one embodiment, the current collecting plate 100 and the electrode assembly 200 may be electrically connected to each other by connecting the base portion 110 of the current collecting plate 100 and the electrode assembly 200.

Referring to FIG. 9, the current collecting plate 100 may be located in an area adjacent to the other end of the case 310 within the accommodating space.

Referring to FIG. 9, in one embodiment, the electrode assembly 200 may include a first electrode comprising a first non-coated portion (not shown) and a second electrode comprising a second non-coated portion 210, wherein the second non-coated portion 210 may be connected to the base portion 110.

Referring to FIG. 9, the current collecting plate 100 may be located in the accommodating space, in the region between the electrode assembly 200 and the cap-plate 320 wound along the winding axis. On the other hand, as described above, the non-coated portions may be formed at both ends of the collector. In the electrode assembly 200 wound thereby, both longitudinal ends of the roll may have first non-coated portion and second non-coated portion respectively.

Accordingly, the current collecting plate 100 and the electrode assembly 200 may be coupled in a third direction DR3 such that the base portion 110 of the current collecting plate 100 and the second non-coated portion 210 of the electrode assembly 200 are coupled in a third direction DR3 with reference to FIG. 9. Details regarding the coupling will be described later.

It will be appreciated that each of the first non-coated portion (not shown) and the second non-coated portion 210 may include a flag structure at an outer end. Further, the flag structures may each be folded in a preset direction as described above. Thus, the base portion 110 may be coupled to a plurality of flag structures folded at the second non-coated portion 210, respectively.

It will be appreciated that one or more electrode welding portions (not shown) may be formed on the base portion 110. Accordingly, the plurality of flag structures, each folded at the second non-coated portion 210, may be connected by welding to the one or more electrode welding portions (not shown) formed on the base portion 110.

In one embodiment, the current collecting plate 100 may be electrically connected to the case 310.

In a specific embodiment, the current collecting plate 100 is electrically connected to the case 310, but the current collecting plate 100 and case 310 may be electrically connected to each other by connecting the wall 120 of the current collecting plate 100 and the sidewall 311 of the case 310.

Referring again to FIG. 9, the current collecting plate 100 may be located in the accommodating space, in the region between the electrode assembly 200 and the cap-plate 320 wound along the winding axis. Meanwhile, the base portion 110 may be formed so that at least a portion of it is parallel to an imaginary plane comprising both a first direction DR1 and a second direction DR2. Meanwhile, within the accommodating space, the current collecting plate 100 may be positioned such that an edge of the base portion 110 is adjacent to an inner surface of the sidewall 311.

As described above, the wall 120 may be formed extending along the edge of the base portion 110 in a direction away from the base portion 110. Thus, at least a portion of the wall 120 may be arranged to contact an inner surface of the sidewall 311.

Accordingly, the current collecting plate 100 and case 310 may be coupled in a first direction DR1 with respect to FIG. 9, wherein the inner surfaces of the wall 120 of the current collecting plate 100 and the sidewall 311 of the case 310 are coupled in a first direction DR1.

In one embodiment, the wall 120 and the sidewall 311 may be connected by welding.

It is noted above that one or more case welding portions 129 may be formed on the wall 120. Thus, the inner surface of the sidewall 311 may be connected by being welded to the one or more case welding portions 129 formed on the wall 120. As mentioned above, the case welding portions 129 may be formed in a plurality in the perimeter direction of the wall 120, and may therefore be welded to the inner surface of the sidewall 311 at preset intervals along the perimeter direction of the wall 120.

In having such a coupling relationship, the case 310 may be electrically connected to the second electrode via the current collecting plate 100. Thus, the case 310 may be charged to the same pole as the second electrode. In such an embodiment, the case 310 may itself fulfill the function of a terminal connecting the second electrode to the outside.

Furthermore, as described above with reference to FIGS. 1 to 7, the current collecting plate 100 may comprise a structure with one or more notches 125 in the wall 120. By including such a structure, the current collecting plate 100 may have improved both impact resistance to external forces in the left and right directions and impact resistance to external forces in the up and down directions applied to the current collecting plate 100 when external forces are applied to the battery cell 10 in a structure in which the current collecting plate 100 is welded together with the electrode assembly 200 and the case 310, as described above. Further, the impact resistance to external forces that may be particularly concentrated in a localized area may also be improved, thereby improving the mechanical rigidity and stability of the overall structure of the battery cell 10 wherein the current collecting plate 100 is welded together with the electrode assembly 200 and case 310.

In one embodiment, the battery cell 10 may further comprise a second current collecting plate (not shown).

According to an exemplary embodiment, the second current collecting plate (not shown) may be connected to a first non-coated portion (not shown) of the electrode assembly 200, and may be disposed between the cap assembly and the electrode assembly 200 to electrically connect the electrode terminal 400 of the cap assembly and the first electrode of the electrode assembly 200.

Referring now to FIG. 8, as described above, the closed end 312 may define a cap assembly with the electrode terminal 400 and a gasket or the like.

According to an exemplary embodiment, the electrode terminal 400 has an approximately "H" shaped cross-section and is formed to penetrate the closed end 312, wherein one end may be located within the accommodating space and the other end may protrude from outside the accommodating space in an extending direction of the case 310.

According to an exemplary embodiment, the electrode terminal 400 may be electrically connected to a first electrode in the accommodating space.

According to an exemplary embodiment, with the above configuration, the electrode terminal 400 may function as an external terminal to electrically connect the first electrode to the outside.

According to an exemplary embodiment, the gasket may be configured to prevent electrical contact between the electrode terminals 400 and the closed end 312 of the case 310.

As used herein, the first electrode may refer to an anode and the second electrode may refer to a cathode, but is not necessarily limited thereto.

In one embodiment, the battery cell 10 may have a form factor of 18650, 21700, 26650, 32700, 32140, 46110, 4680, 4695, 48110, 4875, or 4880, or the like, and may be a cylindrical cell. In specific embodiments, the form factor may be 46110, 4680, 4695, 48110, 4875, or 4880, etc. In a more specific embodiment, the form factor of the battery cell 10 may be 4680 with a diameter of approximately 46 mm and a height of approximately 80 mm, but is not necessarily limited thereto.

It is understood by those skilled in the art that the plurality of exemplary embodiments described above are specific examples of the following aspects.

Aspect 1: A current collecting plate comprising: a base portion having a disc shape; a wall extending away from the base portion along the edge of the base portion; and one or more notches formed in the wall.

Aspect 2: The current collecting plate according to Aspect 1, wherein the current collecting plate is a current collecting plate containing a copper.

Aspect 3: The current collecting plate according to Aspects 1 or 2, wherein the base portion includes one or more grooves through the base portion.

Aspect 4: The current collecting plate according to any one of Aspects 1 to 3, wherein the base portion includes one or more electrode welding portions to which an electrode is welded.

Aspect 5: The current collecting plate according to any one of Aspects 1 to 4, wherein the wall is extended in one direction from the edge of the base portion.

Aspect 6: The current collecting plate according to any one of Aspects 1 to 5, wherein the one or more notches are tapered in a direction away from the base portion.

Aspect 7: The current collecting plate according to any one of Aspects 1 to 6, wherein the depth of the one or more notches are 0.1 to 0.5 times the extended length of the wall.

Aspect 8: The current collecting plate according to any one of Aspects 1 to 7, wherein the one or more notches are formed in plurality at preset intervals on the wall.

Aspect 9: The current collecting plate according to any one of Aspects 1 to 8, wherein the wall is extended in two different directions from the edge of the base portion.

Aspect 10: The current collecting plate according to any one of Aspects 1 to 9, wherein the wall includes one or more case welding portions to which the case is welded, the one or more case welding portions and the one or more notches are spaced apart from each other.

Aspect 11: A battery cell comprising: a case including a cylindrical sidewall having an accommodating space inside; an electrode assembly accommodated in the accommodating space; and a current collecting plate; wherein the current collecting plate is electrically connected to the electrode assembly, the current collecting plate includes a base portion having a disk shape, a wall extended away from the base portion along an edge of the base portion, and one or more notches formed in the wall.

Aspect 12: The battery cell according to Aspect 11, wherein the base portion and the electrode assembly are connected, thereby the current collecting plate and the electrode assembly are electrically connected to each other.

Aspect 13: The battery cell according to Aspects 11 or 12, wherein the electrode assembly includes a first electrode including a first non-coated portion and a second electrode including a second non-coated portion, the second non-coated portion is connected to the base portion.

Aspect 14: The battery cell according to any one of Aspects 11 to 13, wherein the wall and the sidewall of the case are connected to each other, thereby the current collecting plate and the case are electrically connected to each other.

Aspect 15: The battery cell according to Aspect 14, the wall and the sidewall are connected by welding.

The battery cell 10 according to one embodiment of the present disclosure can be used as a battery cell to power a small device, but can also be preferably used as a unit cell in a battery module and/or battery pack of a medium to large device comprising a plurality of battery cells. Examples of such small devices include, but are not limited to, cell phones, notebook computers, cameras, and the like, and examples of such medium to large devices include, but are not limited to, electric vehicles, hybrid electric vehicles, plug-in hybrid electric vehicles, power storage systems, and the like.

The above description of the present disclosure is for illustrative purposes only, and a person skilled in the art to which the present disclosure pertains will understand that the present disclosure may be easily modified into other specific forms without changing the technical idea or essential features of the present disclosure. Therefore, it should be understood that the embodiments described above are exemplary in all respects and not limiting. For example, each component described as a single entity may be implemented in a distributed manner, and likewise, components described as distributed may be implemented in a combined manner.

The scope of the present disclosure is indicated by the appended claims rather than the detailed description above, and all changes or modifications derived from the meaning and scope of the claims and their equivalent concepts should be construed as being included in the scope of the present disclosure.

## Claims

1. A current collecting plate comprising:

   a base portion having a disc shape;
   a wall extending away from the base portion along the edge of the base portion; and
   one or more notches formed in the wall.

2. The current collecting plate according to claim 1, wherein the current collecting plate is a current collecting plate containing a copper.

3. The current collecting plate according to claims 1 or 2, wherein the base portion includes one or more grooves through the base portion.

4. The current collecting plate according to any one of claims 1 to 3, wherein the base portion includes one or more electrode welding portions to which an electrode is welded.

5. The current collecting plate according to any one of claims 1 to 4, wherein the wall is extended in one direction from the edge of the base portion.

6. The current collecting plate according to any one of claims 1 to 5, wherein the one or more notches are tapered in a direction away from the base portion.

7. The current collecting plate according to any one of claims 1 to 6, wherein the depth of the one or more notches are 0.1 to 0.5 times the extended length of the wall.

8. The current collecting plate according to any one of claims 1 to 7, wherein the one or more notches are formed in plurality at preset intervals on the wall.

9. The current collecting plate according to any one of claims 1 to 8, wherein the wall is extended in two different directions from the edge of the base portion.

10. The current collecting plate according to any one of claims 1 to 9, wherein the wall includes one or more case welding portions to which the case is welded, the one or more case welding portions and the one or more notches are spaced apart from each other.

11. A battery cell comprising:

a case including a cylindrical sidewall having an accommodating space inside;
an electrode assembly accommodated in the accommodating space; and
a current collecting plate;
wherein the current collecting plate is electrically connected to the electrode assembly, the current collecting plate includes a base portion having a disk shape, a wall extended away from the base portion along an edge of the base portion, and one or more notches formed in the wall.

12. The battery cell according to claim 11, wherein the base portion and the electrode assembly are connected, thereby the current collecting plate and the electrode assembly are electrically connected to each other.

13. The battery cell according to claims 11 or 12, wherein the electrode assembly includes a first electrode including a first non-coated portion and a second electrode including a second non-coated portion, the second non-coated portion is connected to the base portion.

14. The battery cell according to any one of claims 11 to 13, wherein the wall and the sidewall of the case are connected to each other, thereby the current collecting plate and the case are electrically connected to each other.

15. The battery cell according to claim 14, the wall and the sidewall are connected by welding.

# FIG. 1

# FIG. 2

# FIG. 3

# FIG. 4

# FIG. 5

# FIG. 6

<u>100</u>

120

129

129

# FIG. 7

100

120

129

# FIG. 8

# FIG. 9

**EUROPEAN SEARCH REPORT**

**Application Number**

EP 25 18 8943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/063662 A1 (SAMSUNG SDI CO LTD [KR]) 20 April 2023 (2023-04-20) | 1-6,8-14 | INV. H01M50/107 |
| A | * the whole document * | 7 | H01M50/533 H01M10/04 |
| X | CN 220 400 849 U (WEILAI BATTERY TECH ANHUI CO LTD) 26 January 2024 (2024-01-26) | 1-6,8-15 | H01M50/536 H01M50/538 |
| A | * the whole document * | 7 | |
| X | EP 2 924 762 A2 (COOPER TECHNOLOGIES CO [US]) 30 September 2015 (2015-09-30) * paragraph [0013] - paragraph [0056] * * pages 1-9 * | 1-7,9-14 | |
| X | EP 4 080 634 A2 (NORTHVOLT AB [SE]) 26 October 2022 (2022-10-26) * paragraph [0037] - paragraph [0070] * * figures 1-9 * | 1-6,8-15 | |

TECHNICAL FIELDS SEARCHED (IPC)

H01M

The present search report has been drawn up for all claims

| Place of search | Date of completion of the search | Examiner |
|---|---|---|
| The Hague | 22 December 2025 | Kreissl, Franz |

## ANNEX TO THE EUROPEAN SEARCH REPORT
## ON EUROPEAN PATENT APPLICATION NO.

EP 25 18 8943

This annex lists the patent family members relating to the patent documents cited in  the above-mentioned European search report.
The members are as contained in the European Patent Office EDP file on
The European Patent Office is in no way liable for these particulars which are merely given for the purpose of information.

22-12-2025

| Patent document cited in search report | | Publication date | Patent family member(s) | | Publication date |
|---|---|---|---|---|---|
| WO 2023063662 | A1 | 20-04-2023 | CN | 118140347 A | 04-06-2024 |
| | | | EP | 4418416 A1 | 21-08-2024 |
| | | | KR | 20230054005 A | 24-04-2023 |
| | | | US | 2025343304 A1 | 06-11-2025 |
| | | | WO | 2023063662 A1 | 20-04-2023 |
| CN 220400849 | U | 26-01-2024 | NONE | | |
| EP 2924762 | A2 | 30-09-2015 | CN | 104952635 A | 30-09-2015 |
| | | | EP | 2924762 A2 | 30-09-2015 |
| | | | KR | 20150112879 A | 07-10-2015 |
| | | | TW | 201541483 A | 01-11-2015 |
| | | | US | 2015279574 A1 | 01-10-2015 |
| EP 4080634 | A2 | 26-10-2022 | CN | 117157790 A | 01-12-2023 |
| | | | EP | 4080634 A2 | 26-10-2022 |
| | | | JP | 7781909 B2 | 08-12-2025 |
| | | | JP | 2024514664 A | 02-04-2024 |
| | | | KR | 20230160343 A | 23-11-2023 |
| | | | SE | 2150507 A1 | 19-04-2022 |
| | | | US | 2022344749 A1 | 27-10-2022 |
| | | | WO | 2022223531 A1 | 27-10-2022 |

EPO FORM P0459

For more details about this annex : see Official Journal of the European Patent Office, No. 12/82